# EUROPEAN PATENT APPLICATION

(11) **EP 1 273 815 A2**
(43) Date of publication of application: **08.01.2003**
(21) Application number: 02254449.8
(22) Date of filing: 25.06.2002
(51) Int. Cl.: F16D 1/033, F16D 1/05, F01D 5/02

(54) **Coupling arrangement**

(30) Priority: 06.07.2001 GB 0116479
(71) Applicant: ROLLS-ROYCE plc, London, SW1E 6AT (GB)
(72) Inventor: Broadhead, Peter, Mickleover, Derby DE3 5AH (GB); Maguire, Alan Robert, Findern, Derby DE65 6AN (GB)
(74) Representative: Gunn, Michael Alan

(57) **Abstract**

A coupling arrangement (20) comprises a first article defining an elongate recess (26), and a second article having an elongate projection (27). The recess (26) and the projection (27) have opposite tapering faces (28, 30, 36, 38). When the projection (27) is received in the recess (26), the corresponding faces of the projection (27) and the recess (26) engage each other in co-operative coupling engagement. The arrangement further includes securing means (44, 46) to secure the first and second articles to each other in said co-operative coupling engagement. In the preferred embodiment, the projection (27) and the recess (26) are generally circular, and the faces (28, 30, 36, 38) are frustoconical.

## Description

This invention relates to coupling arrangements. More particularly, but not exclusively, this invention relates to coupling arrangements between rotary components in a gas turbine engine.

The components in a gas turbine engine are made in a modular form, so that each component can be removed and replaced when necessary. In order for such a modular construction to operate in the desired manner, coupling arrangements between rotary components of the engine, for example between the fan, compressors and turbines and the respective shafts need to fulfil the criteria of easy and repeatable dismantling and assembly, and must also ensure the correct alignment and concentricity.

At present couplings between rotary components are, for example, curvic couplings, hirth couplings or spigot couplings. Each of these couplings is arranged to couple a flange of one rotary component, for example a shaft, to a flange of another rotary component, for example a turbine disc.

Disadvantages of known couplings are that they are expensive and difficult to make, and spigot couplings require significant refurbishment in order to reassemble the components after dismantling.

According to one aspect of this invention, there is provided a coupling arrangement comprising a first article having a convex conical face, and a second article having a concave conical face, the convex and concave faces being configured for co-operative coupling engagement with each other, and the arrangement further including securing means to secure the first article to the second article with the first and second faces in said co-operative coupling engagement.

Preferably, each conical face is frustoconical. The angle between each face, and the axis of the cone defined thereby may be in the range of substantially 3° to substantially 89°, preferably in the range of substantially 10° to substantially 70° and, more preferably, substantially 30° to substantially 60°.

The first and second faces are preferably provided on flanges of the first and second articles. The conical faces are preferably provided on flanges extending circumferentially around the respective rotary component, for example where the articles being coupled comprise rotary components, such as rotary components of a gas turbine engine.

Preferably, the co-operative coupling engagement between said faces is a friction engagement. Thus, in the preferred embodiment torque applied to one of the articles about the main axis is, in the preferred embodiment, transmitted to the other of the articles by friction between said faces.

Preferably, the first article comprises a first coupling member defining a recess defined by the aforesaid convex conical face and a concave conical face. The second article preferably includes a second coupling member having a projection comprising the aforesaid concave conical face and a convex conical face. Advantageously, the projection is receivable in the recess, such that the convex conical face of each of the recess and the projection engages the respective concave conical face of each of the recess and the projection, thereby providing said co-operative coupling engagement.

In the preferred embodiment, the securing means is provided between the respective convex and concave conical faces of each of the projection and the recess. The securing means preferably comprises a plurality of fastening members adapted to be inserted through apertures in the projection and the member defining the recess to secure the first and second articles axially to each other. The fastening members are preferably in the form of bolt onto which nuts can be threadably secured.

In one embodiment, each face may be defined by a straight line rotated about the main axis of the face. In another embodiment, each face may be defined by a curved line rotated about the main axis of the face.

According to another aspect of this invention, there is provided a coupling arrangement comprising a first article defining an elongate recess, and a second article having an elongate projection receivable in the recess, the recess and the projection having opposite tapering faces, wherein when the projection is received in the recess, the corresponding faces of the projection and the recess engage each other in co-operative coupling engagement, and the arrangement further including securing means to secure the first and second articles to each other with the faces in said co-operative coupling engagement.

In the preferred embodiment, the projection and the recess are generally circular in configuration. In this embodiment, the aforesaid faces of the recess and the projection are convex and concave conical faces.

Preferably, the securing means comprises a plurality of fastening members extending through the projection and the recess. Each of the projection and the recess may define a generally planar portion between the opposite faces, the fastening members extending through the planar portions. The fastening members may comprise bolts, and nuts may be threadably tightened on the bolt to secure the first article to the second article.

The preferred embodiment of this invention is particularly suitable for use in a gas turbine engine for coupling two in-line shafts. In such a situation, the shafts comprise flanges, and the faces are provided on the flanges. Alternatively, the preferred embodiment could be used in coupling shafts of a gas turbine engine to other components, for example the rotary components of a fan, compressor or turbine of a gas turbine engine. In this situation, aforesaid rotary component is provided with a flange to couple the rotary component to the shaft.

Embodiments of the invention will now be described by way of example only, with reference to the accompanying drawings, in which:
Fig. 1 is a sectional side view of the upper half of a gas turbine engine;
Fig. 2 is a sectional side view of part of a coupling arrangement;
Fig. 3 is a sectional side view of the coupling arrangement shown in Fig. 3, in an uncoupled condition;
Fig. 4 is a sectional side view of a further embodiment of part of a coupling arrangement; and
Fig. 5 is a sectional side view of part of another embodiment of a coupling arrangement.

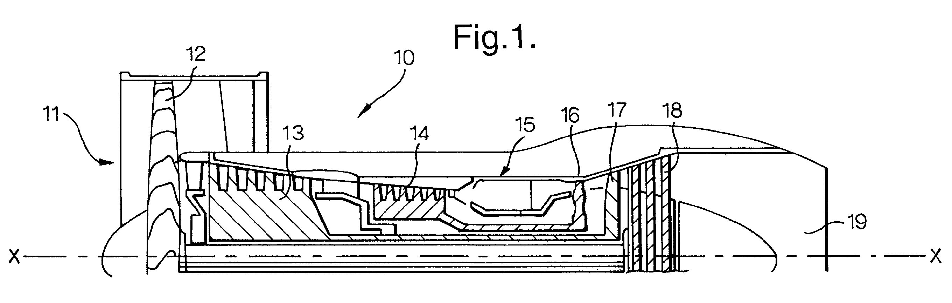

With reference to Fig. 1, a ducted fan gas turbine engine generally indicated at 10 has a principal axis X-X. The engine 10 comprises, in axial flow series, an air intake 11, a propulsive fan 12, an intermediate pressure compressor 13, a high pressure compressor 14, combustion equipment 15, a high pressure turbine 16, an intermediate pressure turbine 17, a low pressure turbine 18 and an exhaust nozzle 19.

The gas turbine engine 10 works in the conventional manner so that air entering the intake 11 is accelerated by the fan to produce two air flows: a first air flow into the intermediate pressure compressor 13 and a second air flow which provides propulsive thrust. The intermediate pressure compressor 13 compresses the air flow directed into it before delivering that air to the high pressure compressor 14 where further compression takes place.

The compressed air exhausted from the high pressure compressor 14 is directed into the combustion equipment 15 where it is mixed with fuel and the mixture combusted. The resultant hot combustion products then expand through, and thereby drive, the high, intermediate and low pressure turbine, 17 and 18 before being exhausted through the nozzle 19 to provide additional propulsive thrust. The high, intermediate and low pressure turbines 16, 17 and 18 respectively drive the high and intermediate pressure compressors 14 and 13 and the fan 12 by suitable interconnecting shafts.

In order to connect the rotary components of the fan 12, compressors 13, 14 and turbines 16, 17, 18 to their respective shafts, or to connect in-line shafts to each other, flanges are provided on the respective shafts and on the rotary components. The flanges include coupling arrangements which couple the rotary components and the shafts together. The coupling arrangements are constructed so that torque can be transmitted from one component to another. The preferred embodiments of the present invention rely on friction between the two coupled flanges to transmit the torque.

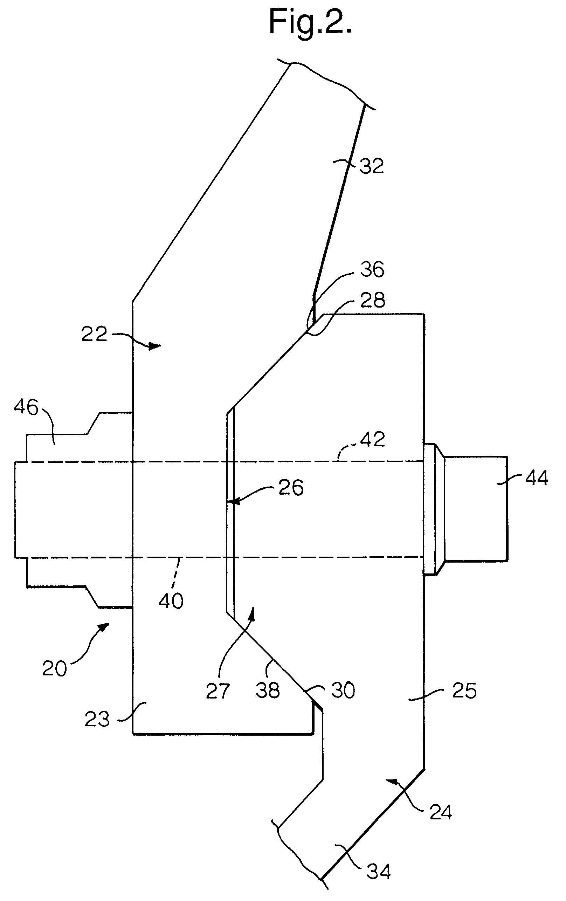

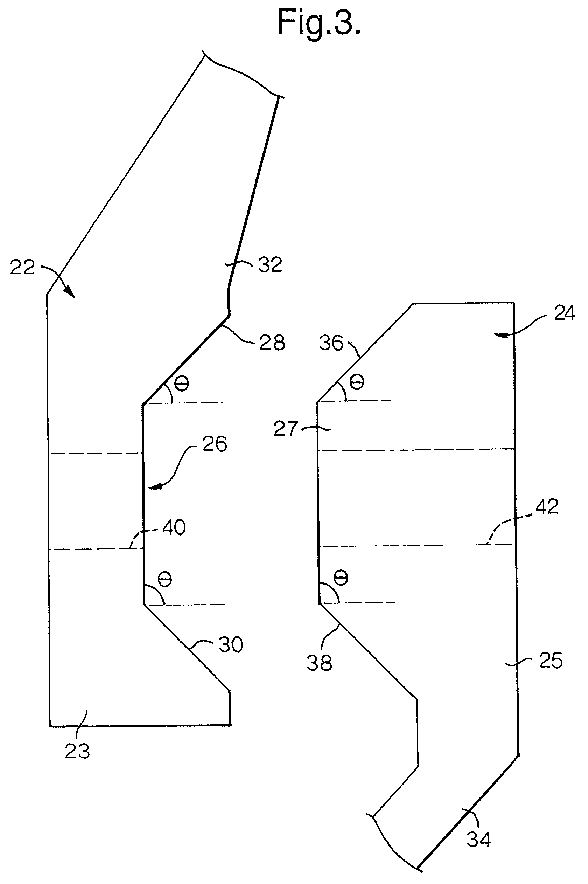

Reference is now made to Fig. 2, which shows a coupling arrangement 20 in a coupled condition, and to Fig. 3 which shows the coupling arrangement 20 in an uncoupled condition. The coupling arrangement 20 is for coupling first and second articles, for example in the form of a fan, compressor or turbine (not shown in Figs. 2 and 3) to a shaft (not shown in Figs. 2 and 3) at respective first and second flanges 22, 24. The first and second flanges 22, 24 extend circumferentially around the main axis X, which, in Figs. 2 and 3, would be below the bottom of the page.

The flange 22 comprises an annular first coupling member 23, which is connected to the rotary components of the fan, compressor or turbine, by connection means 32 which may be in the form of a disc upon which the blades are mounted. The flange 24 comprises an annular second coupling member 25, which is connected to the shaft by connection means 34, which may also be in the form of a disc.

The first coupling member 23 defines an elongate recess in the form of an annular groove 26. The groove 26 is defined between opposed tapering faces 28, 30, each of which also extend around the axis X of the engine 10. The faces 28, 30 are frustoconical in configuration, the face 28 being a concave frustoconical face, and the face 30 being a convex frustoconical face.

The second coupling member 25 includes an elongate circumferentially extending annular projection 27 having opposite annular tapering faces 36, 38 which also extend around the axis X of the engine 10. Each of the faces 36, 38 is therefore a frustoconical face, the face 36 being a convex frustoconical face, and the face 38 being a concave frustoconical face.

As can be seen from Figs. 2 and 3, when the flanges 22, 24 are in the coupled condition, the concave frustoconical face 28 of the groove 26 engages the convex frustoconical face 36 of the projection 27, and the convex frustoconical face 30 of the recess 26 engages the concave frustoconical face 38 of the projection 27.

Securing means in the form of a plurality of nuts 46 and bolts 44 are provided to secure the flanges 22, 24 in their coupled condition. In order to receive the bolts 44, a plurality of substantially equispaced bores 40, 42 are defined in a spaced annular array around the flanges 22, 24 respectively. As can be seen the bores 40 in the flange 22 are defined between the faces 28, 30. Also, the bores 42 in the flange 24 are defined between the faces 36, 38. This arrangement of the bores 40, 42 means that the bolts 44 extend through the projection 27 and the recess 26 between the respective opposite faces 36, 38 and 28, 30.

The spacing between adjacent bores 40 in the flange 22 is substantially the same as the spacing between adjacent bores 42 in the flange 24. Thus, when the flanges 22, 24 are arranged in their coupling condition, the bores 40 can be aligned with the bores 42 to allow the bolts 44 to be inserted. After insertion of the bolts 44, the nuts 46 are threadably tightened on the bolts 44 to secure the flanges 22, 24 to each other.

The engagement between the respective faces 28, 30 and 36, 38 of the flanges 22, 24 is a frictional engagement which is capable of transmitting torque by friction from one flange to the other.

In order for torque to be transmitted effectively, the face 28 of the flange 22 and the face 36 of the flange 24 need to be machined to the same angle θ such that the engagement between the faces 28, 36 is substantially wholly along the respective faces. In the embodiment shown in Figs. 2 and 3, the angle θ is substantially 45°. Similarly, the faces 30, 38 also need to be machined to the same angle, such that there is engagement between the faces 30, 38 substantially wholly along the faces. The angle of the faces 30, 38 to the axis will be generally the same as the angle θ of the faces 28, 36.

It has been found that the angles of the co-operating faces 28, 36 and of the faces 30, 38 need not be exactly the same. A difference in the angles of approximately one hundredth of a degree will still allow the described embodiments to function as desired. With such a difference, it is preferred that the angles θ of the faces, 28, 30 of the recess 26 are made smaller than the angle θ of the faces 36, 38 of the projection 27. This slight difference in angles allows the faces to deform slightly when the flanges 22, 24 are secured together thereby ensuring good frictional contact between respective faces 28, 36 and 30, 38 thereby providing good transfer of torque. This slight difference in the angles has the advantage in the preferred embodiment of allowing for machining tolerances and for the distortion in the flanges 22, 24, when the bolts 44 are tightened.

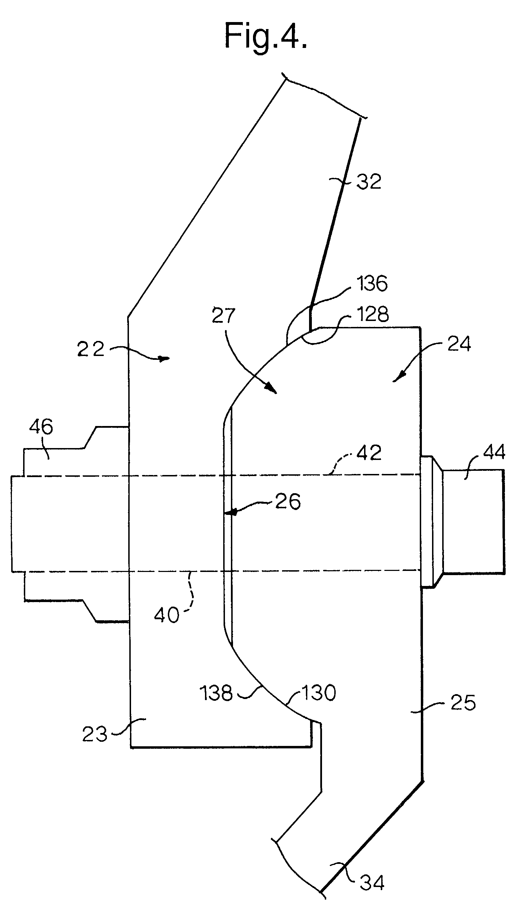

Referring to Fig. 4, there is shown a modification to the embodiment shown in Fig. 1 and 2 which includes many of the same features as shown in Fig. 2, and these have been designated with the same reference numerals.

In the embodiments shown in Fig. 2, the frustoconical faces 28, 30, 36, 38 are, in Figs. 1 and 2, defined in profile by straight lines, as shown. In Fig. 4, the faces when viewed in section as 28, 30, 36, 38 are replaced by frustoconical faces 128, 130, 136, 138 respectively which are, in the sectional view shown in Fig. 4, defined in profile by correspondingly curved lines.

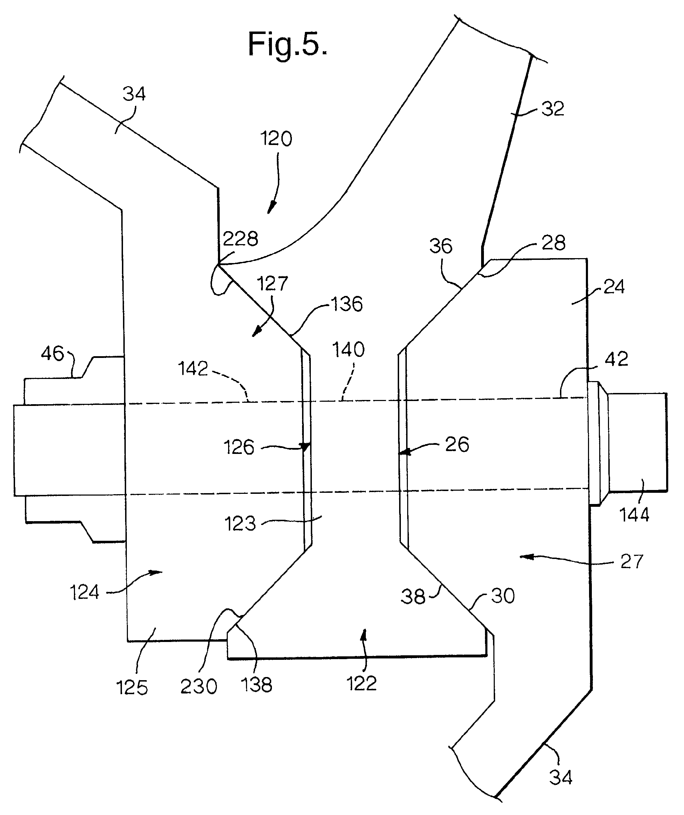

Referring to Fig. 5, there is shown a double coupling arrangement 120 in which the first flange 22 and the first coupling member 23 are replaced by modified first flange 122 and first coupling member 123. The first coupling member 123 defines two recesses 26, 126 opposite each other. The recess 26 is, in the embodiment shown in Fig. 5 defined by the frustoconical faces 28, 30. The recess 126 is defined by frustoconical faces 228, 230.

The embodiment shown in Fig. 5 includes the second flange 24 and the corresponding second coupling member 25, and also includes a further second flange 124 having a further second coupling member 125. The further second coupling member 125 comprises a projection 127 having frustoconical faces 136, 138. The face 136 of the projection 127 co-operatively engages the face 228 of the first coupling member 123, and the face 128 of the projection 127 co-operatively engages the face 230 of the first coupling member 122 in the same way that the faces 36, 38 of the projection 27 engage the faces 28, 30 of the flange 122. The further second coupling member 125 is connected by an appropriate connection member 134 to the another rotary component of the gas turbine engine 10.

The flange 122 defines a plurality of equispaced bores 140 therethrough similar to the bores 40 in Figs. 1 and 2. The flange 124 defines a plurality of equispaced bores 142 therethrough. In order to secure the flanges 24, 122, 124 to each other, the flanges are arranged in respective co-operative engagement with each other such that the bores 42, 140, 142 are aligned with each other and can receive bolts 144 therethrough so that nuts 46 can be threadably received on the end of the bolts 144. The bolts 144 differ from the bolts 44 in that the bolts 144 are longer.

It will be appreciated that the arrangement of the annular grooves and annular projections on the flanges shown in Fig. 5 can be varied as desired. For example, the central flange could have two projections and the other flanges could each have a groove.

While not wishing to be limited to any particular theory, the inventor believes that the preferred embodiment provides a greater clamping force than known coupling arrangements, because of the creation of a circumferential strain on the coupling member 23 or 123 defining the annular grooves 26 or 126, when the annular projection 27 or 127 is forced into the annular of groove 26 or 126 on tightening the bolts 44 or 144. This circumferential strain acts at right angles to the force provided by the bolts and the combined effect of the force provided by the bolt and of the circumferential strain is to produce a mechanical advantage and a clamping force generally perpendicular to the axial faces which is greater than the force provided by the bolt.

The above described embodiments of the invention have the advantage that they provide a simple and effective friction coupling between flanged rotary components of a gas turbine engine, and which allow dismantling of the coupling without the need to refurbish the contact surfaces prior to reassembling the coupling. They also have the advantage that at angle of θ between 30° and 60°, the need for extracting and heating/cooling the joist is avoided during assembly and dismantling of the component. In addition, the above described embodiments provide a repeatability of the coupling, that is to say each time the components are assembled together, there is perpendicular alignment of the components to the engine axis, and also concentric alignment of the components to the engine axis X. A further advantage of the preferred embodiments is that, where the flanges have the same diameter, any shaft will correctly fit with any other mating component (such as a shaft, turbine or compressor) without the need for special balancing and tests.

A further advantage of the preferred embodiment is that the elastic properties of the flange materials will automatically compensate for differences in the angles of the faces without machining tolerances. This will have the further advantage in the preferred embodiment that there will be no loss of concentric alignment and/or no run-out of the mating components as a result of the differences.

Various modifications can be made without departing from the scope of the invention, for example, the angle θ of the conical faces could be greater or less than the angle of 45° described above. For example, if the angle is decreased to 30°, the friction between the respective faces may have a component parallel to the engine axis that the number of bolts, or the size of the bolts securing the flanges together could be reduced.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A coupling arrangement (20) comprising a first article (23) defining an elongate recess (26), and a second article (25) having an elongate projection (27) receivable in the recess (26), the recess (26) and the projection (27) having opposite tapering faces (28,30,36,38), wherein when the projection (27) is received in the recess (26), the corresponding faces of the projection (27) and the recess (26) engage each other in co-operative coupling engagement, and the arrangement further including securing means (44,46) to secure the first and second articles (23,25) to each other with the faces in said co-operative coupling engagement **characterised in that** each of said recess (26) and said projection (27) are a number.

2. A coupling arrangement according to Claim 1, **characterised in that** the aforesaid faces (28,30,36,38) of the recess (26) and the projection (27) are convex and concave conical faces.

3. A coupling arrangement (20) **characterised in that** said arrangement (20) comprises a first article (23) having an annular convex conical face (30,36), and a second article (25) having an annular concave conical face (28,38), the convex and concave faces (28,30,36,38) being configured for co-operative coupling engagement with each other, and the arrangement further including securing means to secure the first article (23) to the second article (25) with the convex and concave faces (28,30,36,38) in said co-operative coupling engagement.

4. A coupling arrangement according to Claim 3, **characterised in that** the first article (23) comprises a member having a projection (27) comprising the aforesaid convex conical face (30,36), and a concave conical face (28,38), and the second article (25) includes a member which defines a recess (26) having the aforesaid concave conical face (28,38) and a convex conical face (30,36).

5. A coupling arrangement according to Claim 4, **characterised in that** the projection (27) is receivable in the recess (26), such that the convex conical face (28,30,36,38) of each of the recess (26) and the projection (27) engages a corresponding concave conical (28,30,36,38) face of each of the recess (26) and the projection (27), thereby providing said co-operative coupling engagement (20).

6. A coupling arrangement according to any of Claims 2 to 5, **characterised in that** each conical face (28,30,36,38) is frustoconical.

7. A coupling arrangement according to any of Claims 2 to 6, **characterised in that** the angle between each face (28,30,36,38), and the axis of the cone defined thereby is in the range of substantially 3° to substantially 89°.

8. A coupling arrangement according to Claim 7, **characterised in that** said angle is in the range of substantially 10° to substantially 70°.

9. A coupling arrangement according to Claim 7 or 8, **characterised in that** said angle is in the range of substantially 30° to substantially 60°.

10. A coupling arrangement according to any preceding claim, **characterised in that** the first and second faces (28,30,36,38) are provided on flanges (22,24) of the first and second articles (23,25).

11. A coupling arrangement according to Claim 10, **characterised in that** the flanges (22,24) extend circumferentially around the respective first and second articles (23,25).

12. A coupling arrangement according to any preceding claim, **characterised in that** the co-operative coupling engagement between said faces (28,30,36,38) is a friction engagement.

13. A coupling arrangement according to any preceding claim, **characterised in that** the securing means (44,46) is provided between the respective faces (28,30,36,38) of each of the projection (27) and the recess (26).

14. A coupling arrangement according to Claim 13, **characterised in that** the securing means (44,46) comprises a plurality of bolts (44) adapted to be inserted through apertures (40,42) in the projection and the member defining the recess to secure the first and second articles axially to each other by the use of nuts (46).

15. A coupling arrangement according to any preceding claim, **characterised in that** each face (28,30,36,38) is defined by a straight line rotated about the axis of the face (28,30,36,38).

16. A coupling arrangement according to any of Claims 1 to 14, **characterised in that** each conical face (30,36) is defined by a curved line rotated about the axis of the face (30,36).

17. A gas turbine engine incorporating a coupling arrangement according to any preceding claim.
